Europäisches Patentamt

European Patent Office

Office européen des brevets

(19)

(11) Numéro de publication : **0 078 197**
**B1**

(12) **FASCICULE DE BREVET EUROPÉEN**

(45) Date de publication du fascicule du brevet :
07.08.85

(51) Int. Cl.⁴ : **C 04 B 35/80, C 04 B 26/02,
E 04 B 1/76, F 16 L 59/02**

(21) Numéro de dépôt : 82401902.0

(22) Date de dépôt : 15.10.82

(54) **Matériaux composites céramisés à résistance mécanique et thermique élevée et leur préparation.**

(30) Priorité : 20.10.81 FR 8119692

(43) Date de publication de la demande :
04.05.83 Bulletin 83/18

(45) Mention de la délivrance du brevet :
07.08.85 Bulletin 85/32

(84) Etats contractants désignés :
BE DE GB IT NL SE

(56) Documents cités :
FR-A- 2 136 253
US-A- 4 252 588
US-A- 4 284 664
**Le dossier contient des informations techniques présentées postérieurement au dépôt de la demande et ne figurant pas dans le présent fascicule.**

(73) Titulaire : **Office National d'Etudes et de Recherches Aerospatiales (O.N.E.R.A.)
29 Avenue de la Division Leclerc
F-92320 Châtillon-sous-Bagneux (FR)**

(72) Inventeur : **Jamet, Jean
24, Bois de Montmarre
F-91640 Janvry (FR)**

(74) Mandataire : **Peaucelle, Chantal et al
Cabinet Plasseraud 84, rue d'Amsterdam
F-75009 Paris (FR)**

Jouve, 18, rue St-Denis, 75001 Paris, France

EP 0 078 197 B1

# 0 078 197

**Description**

L'invention est relative à des matériaux composites céramisés à résistance mécanique et thermique élevée et à leur préparation.

Elle concerne, plus particulièrement, des matériaux composites du genre de ceux obtenus par injection, dans un substrat de renforcement en un matériau céramique fibreux, d'un composé précurseur du matériau céramique constituant la matrice de la structure.

On sait que des composites céramique-céramique de ce type sont utilisés dans l'industrie, en particulier pour l'élaboration de pièces devant résister à des contraintes mécaniques et/ou thermiques.

Ainsi le brevet US-A-4 284 664 décrit entre autres des matériaux composites céramisés, comportant un substrat de renforcement formé de plusieurs couches de tissu, en fibres de silice. Une dispersion de silice dans une solution aqueuse d'un silicate alcalin est introduite dans ledit substrat, et l'ensemble est soumis à un traitement thermique modéré (à une température maximale de quelques centaines de degrés) pour sécher la dispersion sans frittage des particules de silice.

Mais, dans les applications envisagées, les composites peuvent être soumis à des agressions très sévères.

L'un des problèmes auxquels on se heurte alors avec les composites connus résulte d'une détérioration rapide de leur structure s'accompagnant de processus de délaminage et de fissuration.

L'intérêt de disposer de matériaux plus performants a conduit l'inventeur à étudier des combinaisons substrat-matrice capables de résister, pendant une durée limitée, généralement inférieure à une heure, à des contraintes telles que celles que peuvent subir des boucliers thermiques et, sur de longues années, à diverses agressions mécaniques à des températures moyennes de l'ordre de 250 °C.

Les travaux effectués ont montré qu'en mettant en œuvre, pour les substrats, des matériaux à forte résilience, et en réalisant des matrices présentant des propriétés mécaniques relativement faibles, il était possible de disposer de combinaisons permettant d'élaborer des composites particulièrement performants au regard des exigences requises.

L'invention a donc pour but de fournir des matériaux composites céramisés présentant un large spectre de propriétés mécaniques et thermiques et possédant, en particulier, un comportement structural.

Elle vise également à fournir des matériaux pouvant être utilisés, grâce à ces propriétés, dans un domaine d'application étendu concernant, par exemple, aussi bien l'élaboration de pièces pour l'aéronautique que des éléments de moteurs.

Elle a également pour but de fournir un procédé d'élaboration de matériaux composites céramisés de mise en œuvre aisée, exploitable à l'échelle industrielle.

Les composites céramique-céramique de l'invention comportent un substrat de renforcement formé de fibres céramiques tissables dans lesquelles on a introduit, par injection par voie liquide, un précurseur de matériau céramique aux fins d'élaboration d'une matrice occupant au moins la majeure partie du volume libre du substrat et une résine organique conduisant à la formation d'une surmatrice.

Plus précisément, l'invention a pour objet des matériaux composites céramisés comportant un substrat de renforcement formé de fibres céramiques tissables à propriétés thermomécaniques élevées, n'ayant pas subi d'altérations mécaniques ou chimiques, dans lesquelles on a introduit, par injection par voie liquide, un précurseur de matériau céramique aux fins d'élaboration d'une matrice non frittée, occupant au moins la majeure partie du volume libre du substrat et formée d'un oxyde céramique choisi dans le groupe comprenant la silice ($SiO_2$), l'oxyde de chrome ($Cr_2O_3$) et l'oxyde de magnésium (MgO), caractérisés en ce qu'ils comprennent en outre une seconde matrice, ou surmatrice, constituée par un polymère organique.

L'oxyde matriciel n'étant pas fritté, il présente des propriétés mécaniques relativement faibles. La cohésion des particules d'oxyde dans ces composites est telle qu'elle permet, sous contrainte, une microfissuration qui progresse jusqu'au niveau des fibres.

On observera qu'avec une structure de ce type, lorsque le composite est soumis à des agressions thermomécaniques, les particules d'oxydes, du fait de leur faible cohésion, peuvent avantageusement amortir les contraintes, par frottement, et éviter ainsi, ou tout au moins réduire fortement, la fissuration du renforcement.

La mise en œuvre, en combinaison, d'une part d'une telle matrice non frittée, à faibles propriétés mécaniques, et d'autre part, d'un substrat de renforcement fibreux à propriétés thermomécaniques élevées, permet alors de bénéficier des propriétés de résilience du renforcement fibreux utilisé.

La deuxième matrice, ou surmatrice, renforce la cohésion du matériau matriciel évoqué ci-dessus et les liaisons fibre-matrice dans le domaine de thermostabilité du matériau utilisé pour l'élaboration de la surmatrice.

La mise en œuvre de plusieurs matrices associées à des substrats de renforcement à résilience élevée conduit à des composites à comportement structural pendant de longues périodes, dans le domaine de thermostabilité du polymère, et possédant une remarquable résistance, au moment de l'agression thermomécanique oxydante, grâce à l'existence simultanée et permanente de la fibre et de la partie céramique de la matrice.

Sous l'effet de l'agression, on observe, dans les premiers instants une combustion de la partie

2

organique de la matrice, puis un frittage de la céramique matricielle susceptible de prendre un relais mécanique suffisant pour assurer la survie nécessaire du composite.

Ces composites s'avèrent avantageusement capables de résister pendant une durée limitée (pendant environ 3 mn) à des charges mécaniques et/ou thermiques à des températures pouvant dépasser 1 000 °C en ambiance oxydante. Ces composites sont donc particulièrement appropriés pour constituer des éléments structuraux pouvant être soumis à des agressions très sévères, en particulier des pièces de faible épaisseur, à grand développement surfacique, devant opérer dans un environnement acoustique de très forte intensité de nature à précipiter les endommagements par fatigue. Parmi des applications de ce type, on peut citer les utilisations en tant que boucliers thermiques en environnement moteur. Ils seront utilisés avec avantage pour la constitution de pièces de moteurs, d'embases ou de boucliers thermiques. Ils conviennent pour des fonctionnements de longue durée, à température moyenne (250 °C).

Selon une disposition préférée de l'invention, les fibres du substrat présentent une architecture multidirectionnelle, avantageusement tridimensionnelle, ce qui exclut une direction privilégiée de fissuration et conduit à des composites à comportement structural de grande performance.

Selon le mode de sollicitation prévu, les taux de renforcement directionnels seront différents.

Le taux volumique de fibres est avantageusement de l'ordre de 40 à 50 % de telle sorte que le substrat soit encore déformable lors d'un éventuel moulage en forme.

Des fibres céramiques de renforcement préférées sont choisies dans le groupe comprenant des fibres de silice, de carbure de silicium, d'alumine, et fibres analogues possédant des propriétés mécaniques importantes à haute température et non oxydables.

Outre l'avantage d'une résilience élevée, ces fibres s'avèrent remarquablement satisfaisantes en ce qui concerne leur compatibilité avec l'oxyde de la matrice. On observe, en outre, une adhésion fibre-matrice de type mécanique particulièrement favorable dans le cas d'utilisation à haute température.

Le matériau de la surmatrice est avantageusement constitué par un polymère organique tel qu'un polymère phénolique ou une polystyrène-pyridine, la proportion pondérale étant de 5 à 10 % de surmatrice dans le composite final.

L'invention vise également un procédé d'élaboration de composites céramique-céramique par injection dans un substrat de renforcement formé de fibres céramiques d'un précurseur, à l'état liquide, de matériau céramique, afin d'élaborer une matrice céramique et injection, dans un récipient renfermant le composite céramisé, d'une résine organique.

Ce procédé comprenant les étapes consistant à :

a) injecter sous vide dans un substrat formé de fibres céramiques tissables à propriétés thermomécaniques élevées, un précurseur de matrice, sous forme liquide, constitué par un composé capable, par pyrolyse, de conduire à un oxyde choisi dans le groupe comprenant $SiO_2$, $Cr_2O_3$ et $MgO$ ;

b) soumettre l'ensemble à des conditions de pression et de température permettant un remplissage homogène, au moins dans la majeure partie du volume libre du substrat, par le précurseur et la transformation in situ du précurseur en l'un des oxydes céramiques définis sous a), cette transformation étant réalisée de manière à conduire à un matériau céramique non fritté et à assurer l'intégrité mécanique des fibres ;

ces étapes a) et b) étant éventuellement répétées jusqu'à l'obtention d'un composite possédant la masse volumique souhaitée, est caractérisé en ce qu'il comprend en outre l'étape consistant à :

c) injecter, sous vide, dans le composite céramisé un matériau à l'état liquide, constitué par une résine organique, puis à établir des conditions de température et de pression permettant la polymérisation de la résine.

Selon un mode préféré de réalisation de l'étape d'injection a), on met en œuvre, à température ambiante, un précurseur en solution aqueuse, en suspension, ou fondu dont la viscosité n'excède pas environ 10 Pa · s (100 poises).

Comme précurseur des oxydes constituant selon l'invention la matrice céramique, à savoir $SiO_2$, $Cr_2O_3$ ou $MgO$, on met respectivement en œuvre de la silice colloïdale, de l'anhydride chromique ($CrO_3$) ou du nitrate hydraté de magnésium ($Mg(NO_3)_2 · 2H_2O$).

Dans le cas d'un précurseur constituant une phase solide particulaire suspendue comme la silice colloïdale, les dimensions de particules sont avantageusement inférieures ou égales au dixième du diamètre de la fibre.

Pour réaliser l'étape de céramisation selon b), afin de conserver l'intégrité mécanique des fibres et de développer ainsi tout leur potentiel dans le composite final, on effectue la transformation du précurseur à des températures n'excédant pas 550 °C, et l'on opère à la pression atmosphérique.

Comme déjà indiqué, on réalise la céramisation de manière à éviter le frittage du matériau céramique (on entend par état fritté celui qui correspond à une densification optimale de la matière par seul traitement thermique).

On notera cependant que certaines fibres telles que les fibres de carbure de silicium peuvent admettre des températures de traitement de 1 200 °C environ.

Selon un mode préféré de réalisation du procédé de l'invention, on met en œuvre un substrat de renforcement multidirectionnel, formé de fibres céramiques à propriétés thermomécaniques élevées, telles que des fibres de CSi ou d'$Al_2O_3$.

3

Pour assurer une pénétration homogène du précurseur, on soumet le substrat à un traitement dit d'accrochage fibre-matrice afin d'évacuer les agents textoplastiques utilisés pour le tissage du substrat.

Avant de procéder à l'injection du précurseur, le substrat est ensuite laissé sous vide pendant une durée suffisante pour éliminer les composés volatils qu'il peut renfermer et qui gêneraient l'injection.

Pour former une matrice céramique en SiO$_2$, Cr$_2$O$_3$ ou MgO, on remplit un récipient renfermant le substrat fibreux, par injection sous vide, respectivement d'une suspension colloïdale de silice, d'une masse fondue ou d'une solution aqueuse de CrO$_3$, ou d'une masse fondue de nitrate hydraté de magnésium.

On laisse le substrat s'imprégner du précurseur sous pression atmosphérique puis on établit des conditions permettant de transformer in situ par pyrolyse le précurseur utilisé en oxyde répondant aux caractéristiques définies plus haut.

Avec les combinaisons substrat-matrice particulières indiquées ci-dessus, il apparaît avantageux d'effectuer cette transformation sous pression atmosphérique, à des températures ne dépassant pas 200 °C environ dans le cas de la formation de SiO$_2$ et de Cr$_2$O$_3$, et 350-400 °C pour l'élaboration de MgO.

Dans un premier temps, on applique des températures inférieures à 100 °C, pour éliminer l'eau et les composés volatils dans des conditions ménagées, en évitant leur ébullition.

Dans ces conditions, on conserve l'intégralité mécanique des fibres et on obtient des adhésions fibre-matrice de bonne qualité, ce qui conduit à des composites céramisés possédant des tenues mécaniques de grand intérêt.

On injecte dans un récipient renfermant le composite céramisé une résine organique, avantageusement une résine phénolique ou de polystyrylpyridine, dont on a au préalable évacué les produits volatils susceptibles de rentrer en ébullition au moment de l'injection sous vide et de déclencher un phénomène de moussage.

Le récipient renfermant le composite céramisé ainsi que la réserve de matériau à injecter sont chauffés puis on applique une pression supérieure à la pression atmosphérique de l'ordre de 3 à 5 × 10$^5$ Pa.

On effectue la polymérisation de la résine dans des conditions ménagées en appliquant des paliers de température allant en croissant permettant tout d'abord l'élimination des produits volatils, la gélification de la résine puis sa polymérisation.

D'autres caractéristiques et avantages de l'invention apparaîtront dans la description des exemples qui suit.

Exemple 1

Elaboration d'un composite céramisé fibres de silice-matrice de silice-surmatrice de polymère phénolique.

A) Préparation préliminaire du composite céramisé. Cette préparation s'effectue selon les étapes suivantes :

1. prétraitement du substrat fibreux utilisé pour faciliter l'accrochage fibre-matrice ;
2. injection d'une suspension de silice colloïdale et traitement thermique aux fins de formation d'une matrice de silice.

Ces étapes sont réalisées comme suit :

1. prétraitement du substrat fibreux :

On utilise une plaque de fibres de silice (quartz et silice type Roving), tissées tridirectionnellement selon les directions X, Y et Z, X et Y correspondant aux directions principales. Le taux volumique de fibres du substrat est d'environ 45 à 46 %. Les pas, taux directionnels et dimensions du substrat selon X, Y et Z sont donnés ci-après.

| | Pas (mm) | Taux direction. (%) | Dimensions (mm) |
|---|---|---|---|
| En X | 2 | 40 | 220 |
| En Y | 2 | 40 | 110 |
| En Z | 1,5 à 1,6 | 20 | 5 |

4

On laisse ce substrat pendant environ 10 heures dans de l'eau permutée bouillante, afin d'évacuer les agents textoplastiques utilisés pour le tissage. On sèche ensuite ce substrat en étuve à 90 °C pendant 5 heures.

2. formation d'une matrice de silice par injection d'une suspension de silice colloïdale, suivie d'un traitement thermique.

injection.

On place le substrat dans un récipient étroit, ouvert à sa partie supérieure, et on le laisse pendant 3 heures dans une enceinte sous vide. Toujours en opérant sous vide, on introduit dans le récipient une suspension de silice colloïdale, jusqu'à large dépassement du niveau du substrat. Il s'agit d'une suspension à 40 % de silice colloïdale, ayant une dimension de particules de l'ordre de 25 m (250 Å) (telle que celle commercialisée par du Pont de Nemours sous la marque LUDOX A5 40). L'enceinte est alors replacée sous pression atmosphérique, aux fins de pénétration de la silice en suspension dans le substrat. Après une période d'une heure, on récupère le substrat qu'on place dans un moule et on soumet l'ensemble à un traitement thermique. Ce traitement est réalisé en deux temps avec un chauffage tout d'abord à 60 °C durant 15 heures, puis à 150 °C durant 4 heures.

On répète deux autres fois cette succession d'opérations, d'injection et de traitement thermique. A chaque fois, à l'issue du traitement thermique, on extrait du moule le substrat imprégné et on l'introduit immédiatement dans un récipient tel qu'évoqué ci-dessus.

On obtient ainsi un composite silice-silice possédant une bonne tenue mécanique, dans lequel les fibres n'ont subi aucune altération mécanique et la silice matricielle n'est pas frittée. Dans les conditions utilisées, on obtient une condensation partielle des radicaux hydroxyle de la silice, ce qui confère une cohésion suffisante à la matrice. La porosité de la silice est de l'ordre de 20 % et sa cohésion est faible.

La masse volumique du composite est de 1,6 à 1,7 g/cm³.

B) Elaboration de la surmatrice de polymère phénolique.

On met en œuvre une résine phénolique du type RA 101RP, (commercialisée par RHONE POULENC) chauffée au préalable à 40 °C sous vide afin d'éliminer les produits volatils susceptibles d'entrer en ébullition au moment de l'injection sous vide. On procède alors à l'injection de résine dans le substrat imprégné obtenu à l'issue de l'exemple 1, en opérant comme dans cet exemple mais en chauffant le récipient contenant le substrat et le réservoir de résine à 40 °C et en appliquant une pression de $4 \times 10^5$ Pa pendant une heure.

On effectue ensuite la polymérisation de la résine en opérant dans le moule primitif traité au préalable avec un anti-adhésif tel que celui commercialisé sous la marque VARLON. Le moule est placé dans une étuve ventilée et soumis au cycle thermique suivant :

4 h à 60 °C
4 h à 80 °C
17 h à 90 °C
4 h à 130 °C
15 h à 170 °C.

Cette opération conduit à un composite silice-silice avec surmatrice en polymère phénolique caractérisé par les propriétés suivantes :

1) sa résistance mécanique en flexion est de 230-240 MPa ;
2) son mode de rupture est de type résilient, il peut subir en effet une déformation d'environ 10 % en flexion avant de rompre totalement ;
3) à condition d'être soutenu mécaniquement (disque de 100 mm de diamètre), il résiste très largement plus de 3 minutes en qualité de bouclier thermique soumis à une flamme à 2 000 °K et $3 \times 10^5$ Pa de pression génératrice et placé à 30 cm de l'origine (col de tuyère de 18 mm de diamètre) de cette flamme ;
4) enfin, ce matériau résiste parfaitement au choc thermique et mécanique survenant lors de l'impact d'une flamme torche (en régime stationnaire).

En variante, la surmatrice est élaborée à l'aide d'une résine de polystyrylpyridine.

On opère comme précédemment tout d'abord en évacuant sous vide et à 100 °C les produits volatils de la résine, puis on procède à l'injection à 100 °C et l'on effectue le cycle de polymérisation ménagée jusqu'à 250 °C. Le composite obtenu présente des propriétés du type de celles indiquées ci-dessus.

On notera au passage qu'un matériau composite formé d'un substrat de silice et d'une matrice en silice qui aurait subi un traitement thermique de frittage de matrice à 650 °C ne répondrait pas aux buts recherchés. En effet, le frittage conduit à une dégradation prématurée des fibres de silice et le composite a finalement un comportement non résilient.

## Exemple 2

Elaboration d'un composite fibres de CSi-matrice de $Cr_2O_3$-surmatrice de polymère phénolique ou de PSP.

On opère selon le processus de l'exemple 1.

On utilise comme substrat fibreux, des fibres de carbure de silicium, telles que celles commercialisées par NIPPON CARBON sous la marque NICALON. Ces fibres sont tissées tridimensionnellement.

Pour former la matrice, on utilise une solution aqueuse d'anhydride chromique (160 g de $CrO_3$ dans 100 g d'eau) ou du $CrO_3$ fondu.

Après l'opération d'injection, le substrat est placé dans un moule métallique ayant préalablement subi une chromaluminisation et soumis à une température de 550 °C pendant 4 heures.

Ces opérations d'injection et de traitement thermique sont répétées deux autres fois.

Le composite obtenu possède une très bonne tenue mécanique, sa porosité est de l'ordre de 30 à 32 % mais la cohésion de la matrice est satisfaisante et l'adhésion aux fibres importante (en raison de la réaction très oxydante mise en jeu, qui intervient en phase liquide). La masse volumique est de 2,40 $g/cm^3$.

Les rendements globaux volumiques et pondéraux de densification sont les suivants :

en solution $\rightarrow \eta v = 24 \%$
$\rightarrow \eta p = 47,5 \%$
en fusion $\rightarrow \eta v = 39,4 \%$
$\rightarrow \eta p = 76 \%$

L'élaboration de la surmatrice en polymère phénolique ou en PSP est réalisée selon l'exemple 1.

Le composite obtenu présente les caractéristiques suivantes :

1) sa résistance mécanique en flexion est de 200 MPa ;

2) son mode de rupture est encore très largement résilient. Il subit une déformation d'environ 6 % en flexion avant la rupture finale ;

3) sans aucun soutien mécanique (disque de 100 mm de diamètre), il résiste à la même agression que celle décrite pour l'exemple No 1 ;

4) sans aucun soutien mécanique, il résiste parfaitement au choc thermique et mécanique de l'impact de la flamme-torche.

## Exemple 3

Elaboration d'un composite fibres de $SiO_2$-matrice de MgO.

On opère comme dans l'exemple 1 en mettant en œuvre du nitrate hydraté de magnésium.

La décomposition pyrolytique est réalisée à 340 °C.

Les rendements globaux volumiques et pondéraux de densification sont respectivement de 12,3 et 21 %.

Dans ce cas également, on obtient des adhésions fibre-matrice de bonne qualité, tout en conservant l'intégralité mécanique des fibres.

## Exemple 4

Elaboration d'un composite fibres de CSi-matrice de $SiO_2$-surmatrice phénolique ou de PSP.

On opère comme dans l'exemple 1A, mais un traitement d'accrochage de matrice est effectué sur le substrat fibreux de départ avant l'opération d'injection.

Selon ce traitement, on brûle à l'air à 600 °C les ensimages organiques de la fibre (acrylique).

On procède aux injections de $SiO_2$ en opérant comme dans l'exemple 1A. Ces injections sont avantageusement fixées au nombre de 3.

L'élaboration de la surmatrice en polymère phénolique ou en PSP est réalisée selon l'exemple 1B.

Le composite obtenu présente les caractéristiques suivantes :

— sa résistance mécanique en flexion est de 370 MPa. Ce composite est très résilient. On observe une flèche de 2 mm à l'endommagement et de 7 mm avant rupture totale sur éprouvette de flexion 3 points (longueur de l'éprouvette 50 mm ; rapport longueur-hauteur 10) ;

— sans aucun soutien mécanique, il résiste parfaitement aux chocs thermiques et mécaniques de l'impact de la flamme-torche.

**Revendications**

1. Matériaux composites céramisés comportant un substrat de renforcement formé de fibres céramiques tissables à propriétés thermomécaniques élevées, n'ayant pas subi d'altérations mécaniques ou chimiques dans lesquelles on a introduit, par injection par voie liquide, un précurseur de matériau céramique aux fins d'élaboration d'une matrice non frittée, occupant au moins la majeure partie du volume libre du substrat et formée d'un oxyde céramique choisi dans le groupe comprenant la silice (SiO$_2$), l'oxyde de chrome (Cr$_2$O$_3$) et l'oxyde de magnésium (MgO), caractérisés en ce qu'ils comprennent en outre une seconde matrice ou surmatrice, constituée par un polymère organique.

2. Matériaux selon la revendication 1, caractérisés en ce que les fibres du substrat présentent une architecture multidirectionnelle, avec des taux de renforcement directionnels différents.

3. Matériaux selon la revendication 1 ou 2, caractérisés en ce que les fibres du substrat présentent une architecture tridimensionnelle.

4. Matériaux selon l'une des revendications 1 à 3, caractérisés en ce que les fibres céramiques sont choisies dans le groupe comprenant des fibres de silice de quartz, de silice, de carbure de silicium et d'alumine.

5. Matériaux selon l'une des revendications 1 à 4, caractérisés en ce que la seconde matrice, ou surmatrice, est constituée par un polymère phénolique ou une polystyrène-pyridine.

6. Procédé d'élaboration de matériaux composites céramisés comprenant les étapes consistant à :

a) injecter sous vide dans un substrat formé de fibres céramiques tissables à propriétés thermomécaniques élevées, un précurseur de matrice, sous forme liquide, constitué par un composé capable, par pyrolyse, de conduire à un oxyde choisi dans le groupe comprenant SiO$_2$, Cr$_2$O$_3$ et MgO ;

b) soumettre l'ensemble à des conditions de pression et de température permettant un remplissage homogène, au moins dans la majeure partie du volume libre du substrat, par le précurseur, et la transformation in situ du précurseur en l'un des oxydes céramiques définis sous a), cette transformation étant réalisée de manière à conduire à un matériau céramique non fritté et à assurer l'intégrité mécanique des fibres ;

ces étapes a) et b) étant éventuellement répétées jusqu'à l'obtention d'un composite possédant la masse volumique souhaitée, caractérisé en ce qu'il comprend en outre l'étape consistant à :

c) injecter, sous vide, dans le composite céramisé un matériau à l'état liquide, constitué par une résine organique, puis à établir des conditions de température et de pression permettant la polymérisation de la résine.

7. Procédé selon la revendication 6, caractérisé en ce qu'on met en œuvre dans l'étape a), à température ambiante, de la silice colloïdale en suspension aqueuse, de l'anhydride chromique en solution aqueuse ou en fusion, ou du nitrate hydraté de magnésium en fusion, la viscosité du précurseur n'excédant pas 10 Pa · s (100 poises) environ.

8. Procédé selon la revendication 6 ou 7, caractérisé en ce qu'on effectue la transformation pyrolytique à des températures n'excédant pas 550 °C, en opérant à la pression atmosphérique.


**Claims**

1. Ceramized composite materials comprising a reinforcing substrate formed of weavable ceramic fibres with high thermomechanical properties, which have not undergone mechanical or chemical alterations, into which there has been introduced, by injection by the liquid route, a ceramic material precursor for the purpose of developing a non sintered matrix, occupying at least the major part of the free space of the substrate and formed from a ceramic oxide selected from the group comprising silica (SiO$_2$), chromic oxide (Cr$_2$O$_3$) and magnesium oxide (MgO), characterised in that they further comprise a second matrix, or supermatrix, constituted by an organic polymer.

2. Materials according to claim 1, characterised in that the fibres of the substrate have a multidirectional architecture, with different directional reinforcing ratios.

3. Materials according to claim 1 or 2, characterised in that the fibres of the substrate have a tridimensional architecture.

4. Materials according to one of claims 1 to 3, characterised in that the ceramic fibres are selected from the group comprising quartz silica, silica, silicon carbide and alumina fibres.

5. Materials according to one of claims 1 to 4, characterised in that the second matrix, or supermatrix, is constituted by a phenolic polymer or a polystyrenepyridine.

6. Method of producing ceramized composite materials, comprising the steps consisting in :

a) injecting under vacuum in a substrate formed from weavable ceramic fibres with high thermomechanical properties, a matrix precursor, in liquid form, constituted by a compound capable, under pyrolysis, of resulting in an oxide selected from the group comprising SiO$_2$, Cr$_2$O$_3$ and MgO ;

b) subjecting the whole to conditions of pressure and temperature enabling an homogeneous filling, at least of the major part of the free space of the substrate, by the precursor, and the conversion in situ of the precursor into one of the ceramic oxides defined under a), this conversion being carried out so as to lead to a non sintered ceramic material and ensure the mechanical integrity of the fibres ;

these steps a) and b) being possibly repeated until the obtention of a composite possessing the desired density, characterised in that it further comprises the step consisting in :

c) injecting, under vacuum, in the ceramized material, a material in the liquid state, constituted by an organic resin, then establishing conditions of temperature and pressure enabling polymerisation of the resin.

7. Method according to claim 6, characterised in that there is applied in step a), at ambient temperature, colloidal silica in aqueous suspension, chromic anhydride in aqueous solution or under fusion, or hydrated magnesium nitrate under fusion, the viscosity of the precursor not exceeding about 10 Pa.s (100 poises).

8. Method according to claim 6 or 7, characterised in that the pyrolytic conversion is carried out at temperatures not exceeding 550 °C, on operating at atmospheric pressure.

## Patentansprüche

1. Keramisierte Verbundmaterialen mit einem Verstärkungssubstrat, das aus webbaren Keramikfasernmit erhöhten thermomechanischen Eigenschaften gebildet ist, die keine mechanischen oder chemischen Veränderungen erfahren haben, in die durch Injektion auf flüssigem Wege ein Zwischenstoff aus keramischem Material zwecks Herstellung einer nicht gesinterten Matrix eingeführt worden ist, der zumindest den größeren Teil der freien Volumens des Substrats einnimmt und aus einem keramischen Oxid gebildet ist, das aus der Gruppe ausgewählt worden ist, die Siliziumoxid ($SiO_2$), Chromoxid ($Cr_2O_3$) und Magnesiumoxid (MgO) umfaßt, dadurch gekennzeichnet, daß sie außerdem eine zweite Matrix oder Obermatrix umfassen, die durch ein organisches Polymer gebildet ist.

2. Materialien nach anspruch 1, dadurch gekennzeichnet, daß die Fasern des Substrats eine mehrseitig gerichtete Architektur mit unterschiedlichen richtungsabhängigen Verstärkungsgraden aufweist.

3. Materialien nach Anspruch 1 oder 2, dadurch gekennzeichnet, daß die Fasern des Substrats eine dreidimensionale Architektur aufweisen.

4. Materialien nach einem der Ansprüche 1 bis 3, dadurch gekennzeichet, daß die keramischen Fasern aus der Gruppe ausgewählt worden sind, die Quarz-Siliziumoxid-, Siliziumoxid-, Siliziumkarbid- und Aluminiumoxidfasern umfasst.

5. Materialien nach einem der Ansprüche 1 bis 4, dadurch gekennzeichnet, daß die zweite Matrix oder Obermatrix aus einem Phenolpolymer oder einem Polystyrolpyridin gebildet ist.

6. Verfahren zur Herstellung von keramischen Verbundmaterialien, das die Schritte umfaßt, die darin bestehen, daß

a) im Vakuum in ein aus keramischen, webbaren Fasern mit erhöhten thermomechanischen Eigenschaften gebildetes substrat ein Matrix zwischenstoff in flüssiger Form injiziert wird, der aus einer Verbindung gebildet ist, die durch Pyrolyse zu einem Oxid führen kann, das aus der Gruppe ausgewählt ist, die $SiO_2$, $Cr_2O_3$ und MgO umfasst :

b) das Ganze Druck- und Temperaturbedingungen ausgesetzt wird, die ein homogenes füllen zumindest im größeren Teil des freien Volumens des Substrats durch den Zwischenstoff und die Überführung in situ des Zwischenstoffs in eines der unter a) bezeichneten Keramikoxide gestattet, wobei die Überführung so ausgeführt wird, daß sie zu einem keramischen, nicht gesinterten Material führt und die mechanische Integrität der Fasern gewährleistet ist ;

wobei die Schritte a) und b) gegebenenfalls wiederholt werden, bis ein Verbundmaterial erhaiten wird, die die gewünschte Volumenmasse besitzt, dadurch gekennzeichnet, daß es außerdem den Schritt umfaßt, der darin besteht, daß

c) im Vakuum in das keramisierte Verbundmaterial ein Material im flüssigen Zustand injiziert wird, das durch ein organisches Harz gebildet ist, dann Temperatur- und Druckbedingungen eingestellt werden, die die Polymerisation des Harzes gestatten.

7. Verfahren nach Anspruch 6, dadurch gekennzeichnet, daß beim Schritt a) bei Raumtemperatur kolloidales Siliziumoxid in wässriger Lösung, Chromanhydrid in wässriger Lösung oder als Schmelze oder hydratisiertes Magnesiumnitrat als Schmelze verarbeitet werden, wobei die Viskosität des Zwischenstoffs etwa 10 Pa.s (100 Poise) nicht überschreitet.

8. Verfahren nach Anspruch 6 oder 7, dadurch gekennzeichnet, daß die pyrolytische Überführung bei temperaturen durchgeführt wird, die 550 °C nicht überschreiten, wobei bei Atmosphärendruck gearbeitet wird.